**Europäisches Patentamt**

**European Patent Office**

**Office européen des brevets**

(19)

(11) Veröffentlichungsnummer: **0 075 227**
**B1**

(12)

# EUROPÄISCHE PATENTSCHRIFT

(45) Veröffentlichungstag der Patentschrift:
**22.05.85**

(21) Anmeldenummer: **82108404.3**

(22) Anmeldetag: **11.09.82**

(51) Int. Cl.⁴: **B 23 Q 17/24,** B 23 Q 17/22

(54) **Einstellgerät für Messerköpfe.**

(30) Priorität: **12.09.81 DE 3136185**

(43) Veröffentlichungstag der Anmeldung:
**30.03.83 Patentblatt 83/13**

(45) Bekanntmachung des Hinweises auf die Patenterteilung:
**22.05.85 Patentblatt 85/21**

(84) Benannte Vertragsstaaten:
**DE FR GB IT SE**

(56) Entgegenhaltungen:
**DE - A - 1 627 041**
**FR - A - 2 302 817**
**GB - A - 2 045 652**

(73) Patentinhaber: **Santrade Ltd., Alpenquai 12 P.O. Box 321, CH-6002 Luzern (CH)**

(72) Erfinder: **Gebhardt, Wolfgang, Dr. Ing., Esseggerstrasse 19, D-7032 Sindelfingen (DE)**

(74) Vertreter: **Katscher, Helmut, Dipl.-Ing., Bismarckstrasse 29, D-6100 Darmstadt (DE)**

**Beschreibung**

Die Erfindung betrifft ein Einstellgerät für Messerköpfe mit einer drehbar gelagerten Messerkopfaufnahme mit einem Gerätegrundgestell und einer die Kontur jeweils einer Schneide an einer Messstelle erfassenden optischen Abtasteinrichtung, die einen Projektionsschirm aufweist.

Derartige Einstellgeräte dienen zur Schneideneinstellung von Messerköpfen, insbesondere mehrschneidigen Fräsern mit einzeln einstellbaren Schneideinsätzen.

Bei bekannten Einstellgeräten ist die Messerkopfaufnahme an einer drehbar gelagerten Spindel ausgebildet, die gestellfest gelagert ist. Die optische Abtasteinrichtung ist verstellbar, damit man die Messstelle, die dem Nullpunkt eines Fadenkreuzes auf dem Projektionsschirm entspricht, in eine definierte Ausgangsposition in bezug auf die Drehachse des Messerkopfs bringen kann.

Die unvermeidbare Rundlaufungenauigkeit der Messerkopfaufnahmespindel wirkt sich auf die Rundlaufgenauigkeit und Planschlaggenauigkeit des aufgenommenen und abgetasteten Messerkopfs erheblich aus. Im Bereich von Planschlaggenauigkeiten in der Grössenordnung von 0,001 mm, die in vielen Fällen gefordert werden, liefern diese bekannten Einstellgeräte keine befriedigenden Ergebnisse mehr. Hinzu kommt noch, dass die Messstelle, an der zugleich auch die Einstellung der einzelnen Schneideinsätze vorgenommen werden muss, schlecht zugänglich ist.

Aufgabe der Erfindung ist es daher, ein Einstellgerät der eingangs genannten Art zu schaffen, bei dem der durch eine Aufnahmespindel od. dgl. verursachte Planschlagfehler weitestgehend vermieden wird. Zugleich soll die Messstelle zur Vornahme der Schneideneinstellung gut zugänglich sein. Das Gerät soll von einfachem und stabilem Aufbau sein.

Diese Aufgabe wird erfindungsgemäss gelöst durch die Merkmale:

a) die optische Abtasteinrichtung ist im Grundgestell gestellfest und mit angenähert horizontaler optischer Strahlenrichtung angeordnet;

b) ein Aufnahmetisch ist im Grundgestell höhenverstellbar geführt;

c) die drehbare Messerkopfaufnahme ist im Aufnahmetisch in bezug auf die Messstelle verstellbar;

d) der Aufnahmetisch trägt drei Auflagekörper für die Messerkopfrückseite.

Die drehbare Messerkopfaufnahme dient hierbei nur noch dazu, die radiale Lage des Messerkopfs zu bestimmen und die Drehbewegung zwischen den einzelnen Einstellvorgängen zu ermöglichen. Die Planschlageinstellung, die bei der Messerkopfeinstellung von zunehmender Bedeutung ist und sehr hohe Genauigkeitsanforderungen stellt, wird nicht durch die Rundlaufgenauigkeit und Planschlaggenauigkeit der drehbaren Messerkopfaufnahme bestimmt, sondern durch die Lage der drei Auflagekörper, die sich an der Messerkopfrückseite abstützen. Hierbei wird dem Umstand Rechnung getragen, dass diese Messerkopfrückseite die Anlagefläche des Messerkopfs an der Stirnfläche des Aufnahmeflanschs der Werkzeugmaschine bildet. Daher wird die Planschlaggenauigkeit des Messerkopfs durch die Lage der Schneiden in bezug auf diese Messerkopfrückseite bestimmt. Die Abstützung der Messerkopfrückseite an drei Auflagekörpern ermöglicht es, den Messerkopf mit sehr hoher Genauigkeit im Einstellgerät aufzunehmen, ohne dass ein etwaiger Planschlagfehler bzw. Rundlauffehler der drehbaren Messerkopfaufnahme die Planschlaggenauigkeit des Messerkopfs beeinträchtigen könnte.

Eine weitere Steigerung der Genauigkeit und Vereinfachung des Geräteaufbaus wird durch die gestellfeste Anordnung der optischen Abtasteinrichtung erreicht. Die notwendige radiale und axiale Einstellung des abzutastenden Fräsers in bezug auf die Messstelle erfolgt dadurch, dass der Aufnahmetisch im Grundgestell mindestens im Bereich der Messstelle höhenverstellbar ist und dass die Messerkopfaufnahme gegenüber dem Aufnahmetisch verstellbar ist. Die Messstelle, an der auch die Schneideneinstellung vorgenommen wird, befindet sich an einer gut zugänglichen Stelle an der Vorderseite des Einstellgeräts.

Gemäss einer besonders vorteilhaften Ausführungsform des Erfindungsgedankens ist vorgesehen, dass die drehbare Messerkopfaufnahme und mindestens zwei der drei Auflagekörper im Aufnahmetisch verstellbar geführt sind. Dadurch ist in sehr einfacher Weise und ohne Beeinträchtigung der Genauigkeit eine Umstellung auf Messerköpfe unterschiedlichen Durchmessers möglich, wobei ein sehr grosser Durchmesserbereich erfasst werden kann, ohne dass hierfür die Abmessungen des Einstellgeräts wesentlich vergrössert werden müssten. Die Messstelle bleibt gut zugänglich, da die Messstelle für alle Durchmesserbereiche an der gleichen Stelle im Gerät verbleibt.

Zur Anpassung an Messerköpfe unterschiedlicher Dicke, unterschiedlicher Bohrungsdurchmesser und/oder unterschiedlichen Gesamtaufbaus (einteilige Ausführung oder geteilte Ausführung mit einem Tragkörper und einem auswechselbaren Messerkopfring) können die drehbare Messerkopfaufnahme und/oder die Auflagekörper in Weiterbildung des Erfindungsgedankens auswechselbar ausgeführt sein, wobei beispielsweise Auflagekörper unterschiedlicher Höhe Verwendung finden.

Weitere vorteilhafte Ausgestaltungen des Erfindungsgedankens sind Gegenstand von Unteransprüchen.

Die Erfindung wird nachfolgend an Ausführungsbeispielen näher erläutert, die in der Zeichnung dargestellt sind. Es zeigen:

Fig. 1 ein Einstellgerät für Messerköpfe in einer Draufsicht,

Fig. 2 das Gerät nach Fig. 1 im Längsschnitt,

Fig. 3 einen vergrösserten Teilschnitt längs der Linie III-III in Fig. 1,

Fig. 4 eine Ansicht, teilweise im Schnitt, in Richtung des Pfeiles IV in Fig. 3,

Fig. 5 einen Teilschnitt längs der Linie V-V in Fig. 3,

Fig. 6 in einer vereinfachten perspektivischen Darstellungsweise eine abgewandelte Ausführungsform, bei der der Aufnahmetisch auf drei gemeinsam betätigbaren Höhenverstelleinrichtungen aufgenommen ist, und

Fig. 7 in einem Schnitt ähnlich der Fig. 2 eine weitere Ausführungsform, bei der die Gewindespindel für die Verstellung der Spannschiene nach vorn aus dem Einstellgerät herausragt und unmittelbar das zugehörige Verstellhandrad trägt.

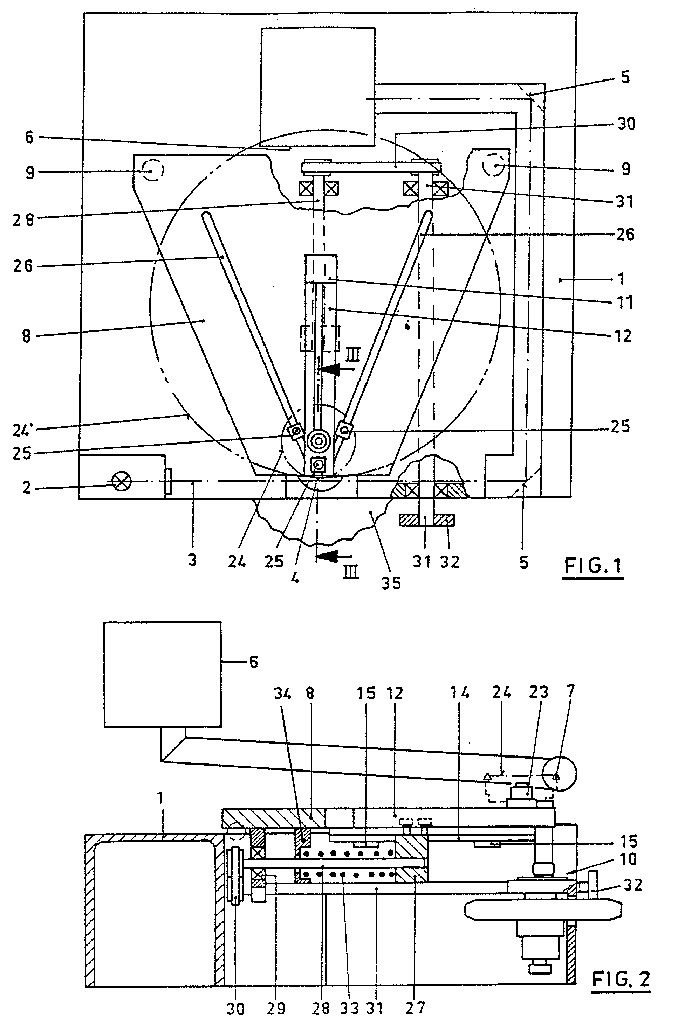

Das Einstellgerät für Messerköpfe weist ein im wesentlichen kastenförmiges Grundgestell 1 auf, das an seiner Oberseite eine optische Abtasteinrichtung trägt. Zur optischen Abtasteinrichtung gehört eine Projektionslichtquelle 2, die an der Vorderseite des Geräts angebracht ist und einen in Fig. 1 mit strichpunktierten Linien angedeuteten Lichtstrahl 3 aussendet, der eine Messstelle 4 passiert und nach Umlenkung an Spiegeln oder Prismen 5 auf einen oberhalb des Grundgestells 1 hinten angeordneten Projektionsschirm 6 fällt. Der Projektionsschirm 6 trägt ein (nicht dargestelltes) Fadenkreuz. Auf dem Projektionsschirm 6 wird die Kontur einer Fräserschneide 7 abgebildet, die sich an der Messstelle 4 befindet. Die Projektionsvergrösserung wird beispielsweise 50fach gewählt.

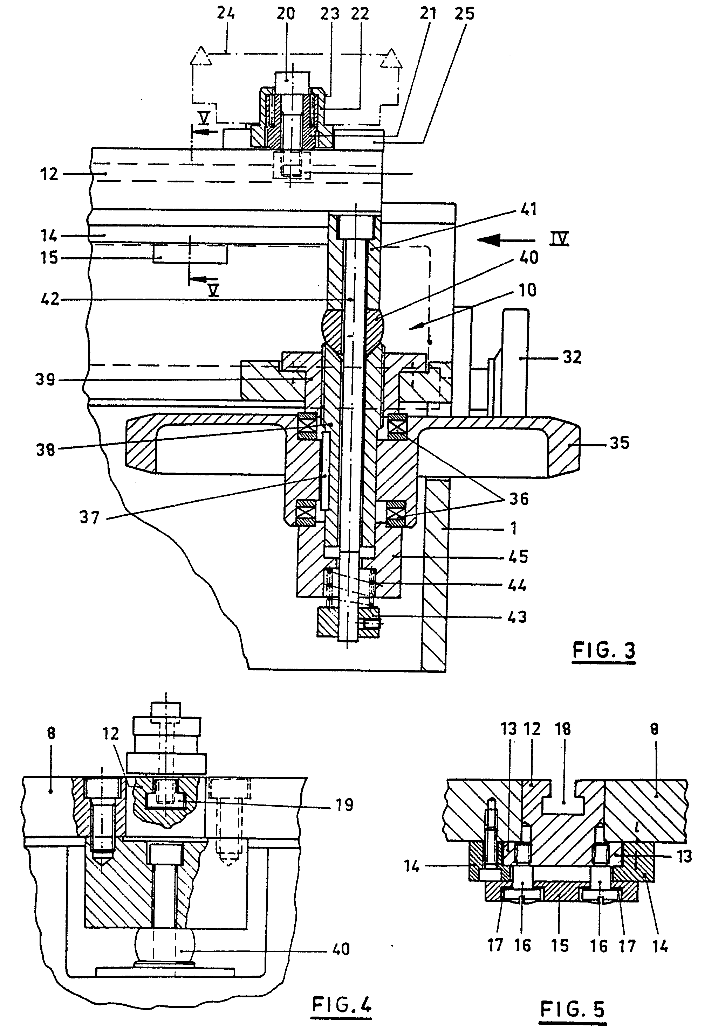

An der Oberseite des Grundgestells 1 ist ein angenähert dreieckförmiger Aufnahmetisch 8 in zwei Lagerpunkten 9 schwenkbar gelagert, wobei die Verbindungslinie der beiden Lagerpunkte 9 die horizontale Schwenkachse des Aufnahmetischs 8 bildet. Unterhalb des Messpunktes 4 ist der Aufnahmetisch 8 auf einer Höhenverstelleinrichtung 10 abgestützt, die später mit Bezug auf Fig. 3 in Einzelheiten noch erläutert wird.

In einem quer zur Richtung des Lichtstrahls 3 verlaufenden Schlitz 11 des Aufnahmetischs 8 ist eine Spannschiene 12 verschiebbar geführt. Wie man aus Fig. 5 erkennt, greift die Spannschiene 12 mit seitlichen Vorsprüngen 13 unter die Unterseite des Aufnahmetischs 8. Am Aufnahmetisch 8 angebrachte Führungsleisten 14 greifen unter die seitlichen Vorsprünge 13 der Spannschiene 12. Eine Unterlagsplatte 15 wird mittels Schrauben 16, die in die Spannschiene 12 eingeschraubt sind, und federnder Zwischenlagen 17 von unten gegen die Leisten 14 gedrückt.

Die Spannschiene 12 weist eine längsverlaufende T-Nut 18 auf, in der ein T-förmiger Spannstein 19 angeordnet ist. Eine in den Spannstein 19 eingeschraubte Schraube 20 befestigt einen Lagerkörper 21 in der jeweils gewählten Stellung an der Spannschiene 12 (Fig. 3 und 4). Auf dem Lagerkörper 21 ist eine drehbare Messerkopfaufnahme 22 drehbar gelagert. An ihrer Aussenseite weist die drehbare Messerkopfaufnahme 22 einen kurzen zylindrischen oder balligen Abschnitt 23 auf, der in die Bohrung eines aufzunehmenden Messerkopfs 24 passt, der in den Fig. 1, 2 und 3 mit strichpunktierten Linien angedeutet ist.

Neben der Messerkopfaufnahme 23 ist am vorderen Ende der Spannschiene 12 ein Auflagekörper 25 angeordnet. Zwei weitere Auflagekörper 25 sind in radial zur Messstelle 4 verlaufenden, im Winkel zueinander angeordneten Nuten 26 des Aufnahmetischs 8 verschiebbar und festlegbar. In Fig. 1 ist die Anordnung der Auflagekörper 25 und der Messerkopfaufnahme 23 für einen Messerkopf 24 von kleinstmöglichem Durchmesser dargestellt. Der grösstmögliche Durchmesser eines aufzunehmenden Messerkopfs ist in Fig. 1 mit einer strichpunktierten Linie 24' bezeichnet. Man erkennt, dass für alle Messerkopfdurchmesser die Messstelle 4 unverändert bleibt.

An der Unterseite der Spannschiene 12 ist eine Gewindemutter 27 befestigt (Fig. 2), die mit einer unterhalb des Aufnahmetischs 8 liegenden Verstellgewindespindel 28 in Eingriff steht. Die Gewindespindel 28 ist in einem Lager 29 am Aufnahmetisch 8 gelagert und ist über einen Riementrieb 30 mit einer im Grundgestell 1 gelagerten Verstellwelle 31 verbunden, die zur Gerätevorderseite zu einem Verstellhandrad 32 führt. Die Gewindemutter 27 ist ausserdem über eine Druckfeder 33 an einem mit dem Aufnahmetisch verbundenen Widerlager 34 federnd abgestützt. Wenn das Handrad 32 gedreht wird, wird über die Gewindespindel 28 eine radiale Verstellung der Spannschiene 12 und damit der daran befestigten Messerkopfaufnahme 23 erreicht.

Die Höhenverstelleinrichtung 10 für den Aufnahmetisch 8 weist ein von der Gerätevorderseite zugängliches Verstellhandrad 35 auf, das über Axiallager 36 am Grundgestell 1 abgestützt ist. Über eine Passfeder 37 ist das Handrad 35 drehbar mit einer Gewindebüchse 38 verbunden, die mit einer gestellfesten Gewindemutter 39 in Eingriff steht. Am oberen Ende der Gewindehülse 38 stützt sich über eine Lagerkugel 40 eine Brücke 41 ab, die beiderseits des Schlitzes 11 mit dem Aufnahmetisch 8 verschraubt ist (Fig. 4).

Eine zentrale Schraube 42 verspannt die Brücke 41 über einen am unteren Ende der Schraube 42 angebrachten Stellring 43 und eine Druckfeder 44 federnd gegen ein gestellfestes Widerlager 45 und hält somit die Kugel 40 in Eingriff mit der zugehörigen Lagerfläche am oberen Ende der Gewindehülse 38.

Für jeden hinsichtlich des Durchmessers und/oder der Höhe unterschiedlichen Messerkopf wird für die Nulleinstellung des Geräts zunächst eine ringförmige Lehre auf die drehbare Messerkopfaufnahme 22 aufgesetzt, die zur Anpassung an unterschiedliche Bohrungsdurchmesser auswechselbar ist, indem die Schraube 20 gelöst wird.

Mittels der Handräder 32 und 35 wird nun die radiale Einstellung und die Höheneinstellung so weit vorgenommen, bis sich die der Messerkopfschneide entsprechende Kante der Lehre an der Messstelle 4 befindet, d. h. bis diese Kante der Lehre im Nullpunkt des Fadenkreuzes auf dem Projektionsschirm 6 abgebildet wird. Damit ist das Gerät für diese Höhe und diesen Durchmesser kalibriert, und die Lehre wird entnommen.

Anschliessend wird der einzustellende Messerkopf aufgelegt, wobei er mit seiner Rückseite an den drei Auflagekörpern 25 anliegt und mit seiner Bohrung auf den Abschnitt 23 der Messerkopfaufnahme 22 aufgenommen ist. Der Messerkopf wird auf der Messerkopfaufnahme 22 nun gedreht, bis die erste einzustellende Schneide sich im optischen Schärfenbereich befindet. Dann wird die Einstellung der Schneide so vorgenommen, dass die einzustellenden Schneidenkanten die gewünschte Lage in bezug auf das Fadenkreuz des Projektionsschirms 6 einnehmen. Anschliessend wird der Messerkopf gedreht, bis die nächste einzustellende Schneide auf dem Projektionsschirm 6 scharf erscheint.

Zur Einstellung bestimmter vorgegebener Schneidenwinkel kann das Fadenkreuz auf dem Projektionsschirm drehbar angebracht sein. Es ist auch möglich, zusätzliche Striche neben dem Fadenkreuz anzubringen, auswechselbare Projektionsschirme 6 vorzusehen oder unterschiedliche Folien auswechselbar am Projektionsschirm 6 anzubringen.

Wie in den Fig. 1 und 2 angedeutet, können die Schwenklager 9 des Aufnahmetischs 8 durch Lagerkugeln gebildet werden; es ist aber auch möglich, eines oder beide dieser Lager mit zylindrischen Lagerkörpern auszustatten.

Die Auflagekörper 25 sind vorzugsweise auswechselbar am Aufnahmetisch 8 bzw. an der Spannschiene 12 angebracht; sie werden gegen Auflagekörper anderer Höhe ausgetauscht, wenn ein Messerkopf mit abweichender Dicke aufgenommen werden soll. Ebenso ist die drehbare Messerkopfaufnahme 22 leicht austauschbar, um eine Anpassung an unterschiedliche Messerkopfbohrungen und unterschiedliche Dickenabmessungen der aufzunehmenden Messerköpfe zu ermöglichen.

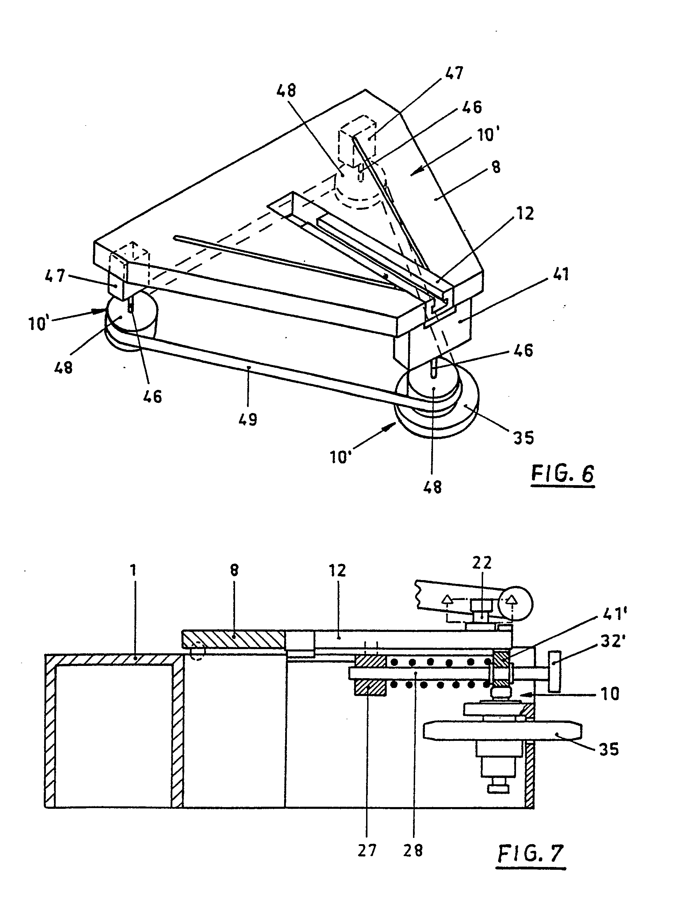

Fig. 6 zeigt eine gegenüber der Ausführung nach den Fig. 1 bis 5 abgewandelte Ausführungsform. Der Aufnahmetisch 8 stützt sich hierbei auf drei Höhenverstelleinrichtungen 10' ab, die jeweils eine Gewindespindel 46 aufweisen. Die Gewindespindel 46 ist jeweils über einen Stützklotz 47 bei den beiden hinteren Auflagern des Aufnahmetischs 8 bzw. die Brücke 41 mit dem Aufnahmetisch 8 verbunden.

Alle drei Gewindespindeln 46 stehen jeweils mit einem mit Innengewinde versehenen Rad 48 in Eingriff, das im Grundgestell drehbar, jedoch axial unverschiebbar gelagert ist. Alle drei Räder 48 sind über einen schlupffreien Antrieb, beispielsweise einen Zahnriemen 49 oder eine Kette, miteinander verbunden. Das an der Maschinenvorderseite liegende Rad 48 ist mit dem Verstellhandrad 35 verbunden. Wird das Verstellhandrad 35 gedreht, so drehen sich alle Räder 48 synchron, so dass alle Gewindespindeln 46 gleichmässig nach oben oder unten geschraubt werden, um den Aufnahmetisch 8 gleichmässig anzuheben oder abzusenken. Der einfacheren Darstellung halber sind in Fig. 6 auch die drehbare Messerkopfaufnahme 22 und die Auflagekörper 25 weggelassen.

Fig. 7 zeigt eine Abwandlung hinsichtlich des Verstellantriebs für die Spannschiene 12. Die Gewindespindel 28', die mit der an der Spannschiene 12 angebrachten Gewindemutter 27 in Eingriff steht, ist bei dieser Ausführungsform in der Brücke 41' in einem Axiallager gelagert und erstreckt sich nach vorn aus der Vorderseite des Einstellgeräts heraus. Dort trägt die Gewindespindel 28' das Verstellhandrad 32'. Auf einen Riementrieb 30 und eine Verstellwelle 31 der Ausführung nach den Fig. 1 bis 5 wird hierbei verzichtet.

**Patentansprüche**

1. Einstellgerät für Messerköpfe (24) mit einer drehbar gelagerten Messerkopfaufnahme (23) mit einem Gerätegrundgestell (1) und einer die Kontur jeweils einer Schneide an einer Messstelle (4) erfassenden optischen Abtasteinrichtung, die einen Projektionsschirm (6) aufweist, gekennzeichnet durch die Merkmale:

a) die optische Abtasteinrichtung (2, 5, 6) ist im Grundgestell (1) gestellfest und mit angenähert horizontaler optischer Strahlenrichtung angeordnet;

b) ein Aufnahmetisch (8) ist im Grundgestell (1) höhenverstellbar geführt;

c) die drehbare Messerkopfaufnahme (22) ist im Aufnahmetisch (8) in bezug auf die Messstelle (4) verstellbar;

d) der Aufnahmetisch (8) trägt drei Auflagekörper (25) für die Messerkopfrückseite.

2. Einstellgerät nach Anspruch 1, dadurch gekennzeichnet, dass der Aufnahmetisch (8) um eine im Abstand zur Messstelle (4) liegende, horizontale Achse (9) schwenkbar ist.

3. Einstellgerät nach Anspruch 2, dadurch gekennzeichnet, dass der Aufnahmetisch (8) unterhalb der Messstelle (4) mit einer Höhenverstelleinrichtung (10) verbunden ist, vorzugsweise einer Verstellgewindehülse (38).

4. Einstellgerät nach Anspruch 1, dadurch gekennzeichnet, dass die drehbare Messerkopfaufnahme (22) und mindestens zwei der drei Auflagekörper (25) im Aufnahmetisch (8) verstellbar geführt sind.

5. Einstellgerät nach Anspruch 4, dadurch gekennzeichnet, dass die drehbare Messerkopfaufnahme (22) längs einer Spannschiene (12) verschiebbar und an dieser festlegbar ist, die im Aufnahmetisch (8) mittels eines Verstellantriebs (28, 30, 31) in bezug auf die Messstelle (4) verstellbar ist.

6. Einstellgerät nach Anspruch 5, dadurch gekennzeichnet, dass der Verstellantrieb für die Spannschiene (12) eine am Aufnahmetisch (8) gelagerte Verstellgewindespindel (28) aufweist, die mit einer an der Spannschiene (12) angebrachten Mutter (27) in Eingriff steht und über einen Riementrieb (30) mit einer im Grundgestell (1) gelagerten Verstellwelle (31) verbunden ist.

7. Einstellgerät nach Anspruch 6, dadurch gekennzeichnet, dass die drehbare Messerkopfaufnahme (22) auswechselbar ist.

8. Einstellgerät nach Anspruch 1, dadurch gekennzeichnet, dass die Auflagekörper (25) auswechselbar sind.

9. Einstellgerät nach Anspruch 1, dadurch gekennzeichnet, dass der Aufnahmetisch (8) von drei gemeinsam betätigbaren Höhenverstelleinrichtungen (10') getragen wird.

10. Einstellgerät nach Anspruch 5, dadurch gekennzeichnet, dass der Verstellantrieb für die Spannschiene (12) eine am Aufnahmetisch (8) gelagerte Verstellgewindespindel (28') aufweist, die mit einer an der Spannschiene (12) angebrachten Mutter (27) in Eingriff steht und an der Gerätevorderseite ein Verstellhandrad (32') trägt.

## Claims

1. A setting apparatus for cutter heads (24) which is provided with a rotatably mounted cutter-head holding fixture (23), an apparatus base frame (1) and an optical scanning device which detects the contour of respectively one blade at a measuring point (4) and which comprises a projection screen (6), characterised by the features:

(*a*) the optical scanning device (2, 5, 6) is arranged in the base frame (1) so as to be fixed to the frame and so as to have an approximately horizontal optical ray direction;

(*b*) a receiving table (8) is guided in the base frame (1) so as to be vertically adjustable;

(*c*) the rotatable cutter-head holding fixture (22) is adjustable in the receiving table (8) with respect to the measuring point (4);

(*d*) the receiving table (8) carries three supporting elements (25) for the cutter-head rear.

2. A setting apparatus as claimed in Claim 1, characterised in that the receiving table (8) can be swivelled about a horizontal axis (9) which is at a distance from the measuring point (4).

3. A setting apparatus as claimed in Claim 2, characterised in that the receiving table (8) is connected, beneath the measuring point (4), to a height-adjustment device (10), preferably a threaded adjusting sleeve (38).

4. A setting apparatus as claimed in Claim 1, characterised in that the rotatable cutter-head holding fixture (22) and at least two of the three supporting elements (25) are adjustably guided in the receiving table (8).

5. A setting apparatus as claimed in Claim 4, characterised in that the rotatable cutter-head holding fixture (22) is slidable along a clamping rail (12) and can be secured in position thereto, which rail is adjustable in the receiving table (8) with respect to the measuring point (4) by means of an adjusting drive (28, 30, 31).

6. A setting apparatus as claimed in Claim 5, characterised in that the adjusting drive for the clamping rail (12) comprises a threaded adjusting spindle (28) which is mounted on the receiving table (8) and which is in engagement with a nut (27) fitted to the clamping rail (12) and which is connected *via* a belt drive (30) to an adjusting shaft (31) mounted in the base frame (1).

7. A setting apparatus as claimed in Claim 6, characterised in that the rotatable cutter-head holding fixture (22) is exchangeable.

8. A setting apparatus as claimed in Claim 1, characterised in that the supporting elements (25) are exchangeable.

9. A setting apparatus as claimed in Claim 1, characterised in that the receiving table (8) is carried by three jointly actuatable height-adjustment devices (10').

10. A setting apparatus as claimed in Claim 5, characterised in that the adjusting drive for the clamping rail (12) comprises a threaded adjusting spindle (28') which is mounted on the receiving table (8) and which is in engagement with a nut (27) fitted to the clamping rail (12) and which carries an adjusting hand-wheel (32') at the apparatus front end.

## Revendications

1. Dispositif de réglage pour têtes porte-lame (24), comportant un logement rotatif (23) de la tête porte-lame, un châssis principal (1) et un dispositif de palpage optique qui établit chaque fois les contours d'un tranchant en un point de mesure (4) et qui présente un écran de projection (6), caractérisé en ce que:

a) le dispositif de palpage optique (2, 5, 6) est agencé dans le châssis principal (1) en étant solidaire de celui-ci et en présentant une direction de rayons optiques approximativement horizontale;

b) une table de réception (8) est guidée dans le châssis principal (1) de manière à être réglable en hauteur;

c) le logement rotatif de la tête porte-lame (22) monté dans la table de réception (8) est réglable par rapport au point de mesure (4);

d) la table de réception (8) porte trois éléments d'appui (25) destinés à la face arrière de la tête porte-lame.

2. Dispositif de réglage selon la revendication 1, caractérisé en ce que la table de réception (8) est pivotable autour d'un axe horizontal (9) écarté du point de mesure (4).

3. Dispositif de réglage selon la revendication 2, caractérisé en ce que la table de réception (8) est reliée, en dessous du point de mesure (4), à un dispositif de réglage en hauteur (10), de préférence une douille de réglage filetée (38).

4. Dispositif de réglage selon la revendication 1, caractérisé en ce que le logement rotatif de la tête porte-lame (22) et au moins deux des trois éléments d'appui (25) sont guidés de manière réglable dans la table de réception (8).

5. Dispositif de réglage selon la revendication 4, caractérisé en ce que le logement rotatif de la tête porte-lame (22) est déplaçable le long d'une glissière (12) et fixable à celle-ci, ladite glissière (12) étant réglable par rapport au point de mesure (4), dans la table de réception (8), au moyen d'un dispositif d'entraînement de réglage (28, 30, 31).

6. Dispositif de réglage selon la revendication 5, caractérisé en ce que le dispositif d'entraînement de réglage de la glissière (12) présente un arbre fileté de réglage (28) logé dans la table de réception (8), qui est en prise avec un écrou (27) monté à la glissière (12) et qui est relié, *via* une commande à courroie (30), à un arbre de réglage (31) logé dans le châssis principal (1).

7. Dispositif de réglage selon la revendication 6, caractérisé en ce que le logement rotatif de la tête porte-lame (22) est remplaçable.

8. Dispositif de réglage selon la revendication 1, caractérisé en ce que les éléments d'appui (25) sont remplaçables.

9. Dispositif de réglage selon la revendication 1, caractérisé en ce que la table de réception (8) est supportée par trois dispositifs de réglage en hauteur (10') actionnables simultanément.

10. Dispositif de réglage selon la revendication 5, caractérisé en ce que le dispositif d'entraînement du réglage de la glissière (12) présente un arbre fileté de réglage (28') logé dans la table de réception (8), qui est en prise avec un écrou (27) monté à la glissière (12) et qui porte un volant de réglage à main (32') à la face frontale du dispositif.

FIG.1

FIG. 2

FIG. 3

FIG.4

FIG. 5

FIG. 6

FIG. 7